# EUROPÄISCHE PATENTSCHRIFT

(11) **EP 3 347 732 B1**
(45) Veröffentlichungstag und Bekanntmachung des Hinweises auf die Patenterteilung: **13.01.2021**
(21) Anmeldenummer: 16763001.1
(22) Anmeldetag: 02.09.2016
(51) Int. Cl.: G01S 17/931, G01S 7/481, G02B 26/08, G01S 17/93

(54) **LASERSCANNER FÜR KRAFTFAHRZEUGE**
LASER SCANNER FOR MOTOR VEHICLES
DISPOSITIF DE BALAYAGE LASER POUR VÉHICULES AUTOMOBILES

(30) Priorität: 08.09.2015 DE 102015115011
(43) Veröffentlichungstag der Anmeldung: 18.07.2018
(73) Patentinhaber: Valeo Schalter und Sensoren GmbH, 74321 Bietigheim-Bissingen (DE)
(72) Erfinder: LIN, Lin, 74321 Bietigheim-Bissingen (DE); HORVATH, Peter, 74321 Bietigheim-Bissingen (DE); SCHULER, Thomas, 74321 Bietigheim-Bissingen (DE)
(74) Vertreter: Kluth, Philipp
(86) Internationale Anmeldenummer: PCT/EP2016/070707
(87) Internationale Veröffentlichungsnummer: WO 2017/042097

(56) Entgegenhaltungen:
- US-A1- 2010 046 057
- US-A1- 2013 001 834
- US-A1- 2014 313 519
- US-A1- 2015 009 485
- US-A1- 2015 042 542
- US-A1- 2015 204 977

## Beschreibung

Die Erfindung betrifft einen Laserscanner für Kraftfahrzeuge gemäß dem Oberbegriff des Anspruchs 1.

Im Automobilbereich werden unterschiedlichste Fahrerassistenzsysteme eingesetzt, das heißt elektronische Zusatzeinrichtungen zur Unterstützung des Fahrers in bestimmten Fahrsituationen. Viele Fahrerassistenzsysteme berücksichtigen dabei Informationen über Objekte im Umfeld des Kraftfahrzeugs. Ein verbreitetes optisches Messverfahren zur Ortung und Messung der Entfernung von Objekten im Raum ist unter der Bezeichnung "LIDAR" ("Light detection and ranging") bekannt. LIDAR-Systeme arbeiten nach dem Lichtlaufzeitverfahren ("Time of flight-Messung"). Dabei werden Lichtpulse ausgesendet und an einem eventuell vorhandenen Objekt reflektiert, wobei die Zeit bis zum Empfang des reflektierten Signals proportional zur Entfernung ist.

Bei einem Laserscanner werden die ausgesendeten Laserpulse über eine schwenkbare Spiegelanordnung so umgelenkt, dass eine Abtastung des Sichtfelds des Laserscanners innerhalb eines Abtastwinkelbereichs stattfindet. DE 10 2005 055 572 B4 offenbart einen Laserscanner, welcher einen Laser als optischen Sender und einen Detektor als optischen Empfänger aufweist. Der Detektor erzeugt bei Empfang eines reflektierten Strahls ein elektrisches Empfangssignal. Erkennt eine Auswertungseinrichtung in dem Empfangssignal ein Echo, so ist dies grundsätzlich auf Reflektionen an einem Zielobjekt der Umgebung zurückzuführen. Der bekannte Laserscanner umfasst eine Umlenkspiegelanordnung, welche einen um eine Drehachse antreibbaren Umlenkspiegel aufweist. Durch die Drehbewegung des Umlenkspiegels werden die Sendelichtstrahlen des optischen Senders in Winkelschritten in die zu vermessende Szene abgegeben.

Es ist ferner bekannt, für eine hohe Abtastgeschwindigkeit und somit eine kurze Reaktionszeit des Laserscanners einen Mikrospiegel, auch MEMS-Spiegel genannt, zum Abstrahlen der Sendelichtstrahlen in die Umgebung einzusetzen. Der Mikrospiegel besteht aus einer Vielzahl von Einzelelementen, bei denen jeder einzelne Mikrospiegel eine verschwenkbare spiegelnde Fläche aufweist. DE 10 2013 009 673 A1 offenbart einen Laserscanner, bei dessen Lichtablenkeinheit es sich um einen Mikrospiegel handelt, der um wenigstens eine Achse, vorzugsweise zwei aufeinander senkrecht stehende Achsen, schwenkbar ist. Der Mikrospiegel des bekannten Laserscanners ist Teil eines MEMS-Bauteils und mittels mehrerer sogenannter Kammantriebe schwenkbar. Der Mikrospiegel ist mit vergleichsweise hohen Geschwindigkeiten bei gleichzeitiger hoher Präzision verstellbar, wodurch eine hohe Abtastgeschwindigkeit und somit eine kurze Reaktionszeit des Laserscanners erreicht werden soll.

In der US 2014/0313519 A1 wird ein optischer Sensor zur Erstellung von 3D-Karten offenbart. Der Sensor weist einen Transmitter auf, der alternierend zumindest zwei Strahlen aus Lichtpulsen aussendet. Die Strahlen werden in einem rasterförmigen Muster ausgesendet, um eine Szene zu erfassen. Die an der Szene reflektierten Lichtstrahlen werden mit einem Empfänger empfangen und auf Basis der Laufzeit der Lichtpulse wird eine 3D-Karte der Szene generiert.

In der US 2015/0009485 A1 wird ein Laser-Radar-System für ein Fahrzeug offenbart. Das Laser-Radar-System weist eine erste und eine zweite Sende- und Empfangseinheit auf, die jeweils unabhängig voneinander einen Umgebungsbereich erfassen.

US 2013/0001834 A1 offenbart einen 3D-Drucker, bei dem mittels eines Laserscanners Lichtpuls auf eine lichtaushärtbares Harz abgelenkt wird.

US 2015/042542 A1 offenbart einen Laserscanner für ein Head-up-Display eines Kraftfahrzeugs, wobei mehrere Sender durch einen Umlenkspiegel auf einen Mikrospiegel gelenkt werden.

US 2015/0204977 A1 offenbart eine Objekterkennungsvorrichtung eines Kraftfahrzeugs mit einer Lichtprojektionseinheit mit einer Lichtquelle, die mehrere "light emitting units" umfasst, einer Lichtscanneinheit, mit der Lichtstrahlen in unterschiedliche Richtungen abgelenkt werden können und einer Lichtempfangseinheit, zum Empfangen von an einem Objekt reflektierten Lichtstrahlen.

US 2010/046057 A1 offenbart eine "laser scanning unit" für einen Drucker oder Kopierer.

Da sämtliche Sendelichtstrahlen auf den relativ kleinen Mikrospiegel gerichtet sein müssen, ist bei Laserscannern mit mehreren Messkanälen, das heißt mindestens zwei optischen Sendern zum Aussenden jeweils eines Sendelichtstrahls, in der Regel eine im Strahlweg wenigstens eines Sendelichtstrahls vor dem Mikrospiegel angeordnete Umlenkeinrichtung vorgesehen. Dazu wird herkömmlich eine konvexe Linse eingesetzt. Derartige Linsen müssen jedoch üblicherweise eine große Apertur aufweisen. Zudem ist es wünschenswert, wenn der Winkelabstand zwischen den Sendelichtstrahlen der optischen Sender möglichst groß ist, wodurch allerdings eine kurze Brennweite der Linse erforderlich wird. Den Anforderungen einer großen Apertur und gleichzeitig kleiner Brennweite sind jedoch physikalische Grenzen gesetzt. Ein weiterer Nachteil der Umlenkung der Sendelichtstrahlen auf dem Mikrospiegel mittels einer konvexen Linse ist der nicht zu vermeidende nachteilige Einfluss der Linse auf die Charakteristik von Laserstrahlen, insbesondere aufgrund von Verzerrung.

Der vorliegenden Erfindung liegt die Aufgabe zugrunde, bei einem Laserscanner mit mehreren Sendelichtstrahlen mit möglichst geringer Verzerrung auf einen Mikrospiegel zu richten.

Diese Aufgabe wird erfindungsgemäß durch einen Laserscanner mit den Merkmalen des Anspruchs 1 gelöst. Erfindungsgemäß ist vorgesehen, dass die Umlenkeinrichtung zur Umlenkung eines Sendelichtstrahls einen im Strahlweg des Sendelichtstrahls angeordneten Umlenkspiegel aufweist. Der Umlenkspiegel reflektiert verlust- und verzerrungsfrei den auftreffenden Sendelichtstrahl. Der Umlenkspiegel wird derart angeordnet und ausgerichtet, dass der auftreffende Sendelichtstrahl zum Mikrospiegel gelenkt ist. Der erfindungsgemäße Umlenkspiegel für einen Sendelichtstrahl gibt einen großen Freiheitsgrad bei der geometrischen Anordnung der optischen Sender und der Umlenkeinrichtung. Dabei können einer oder mehrere optische Sender auf den Mikrospiegel gerichtet werden und andere, deren optische Achse nicht auf den Mikrospiegel gerichtet ist, werden über Umlenkspiegel auf den Mikrospiegel umgelenkt.

In einer vorteilhaften Ausführungsform der Erfindung weist die Umlenkeinrichtung für jeden ihr zugeordneten Sendelichtstrahlen einen Umlenkspiegel auf. Ist einer der optischen Sender mit seiner optischen Achse auf den Mikrospiegel gerichtet, so werden jedem weiteren optischen Sender jeweils ein Umlenkspiegel zugeordnet.

Erfindungsgemäß sind die optischen Sender in einer Reihe angeordnet, wobei den außen liegenden Sendern ein Umlenkspiegel zugeordnet ist und der zentrale optische Sender auf den Mikrospiegel gerichtet ist. Auf diese Weise wird über die außen liegenden Umlenkspiegel ein für den Scanvorgang vorteilhafter Winkelabstand zwischen benachbart liegenden Sendelichtstrahlen erzeugt. Die Anordnung der optischen Sender in einer Reihe legt die Sendestrahlen der optischen Sender in eine gemeinsame Scanebene. Werden weitere optische Sender außerhalb der Ebene angeordnet, so können Scanvorgänge mit Elevation realisiert werden. Die erfindungsgemäßen Umlenkspiegel erzeugen dabei den gewünschten Winkelabstand der Sendelichtstrahlen zu den jeweils benachbart liegenden Sendelichtstrahl. Erfindungsgemäß sind die Umlenkspiegel der mehreren optischen Sender derart relativ zu dem jeweils zugeordneten optischen Sender angeordnet und ausgerichtet, dass die Sendelichtstrahlen in dem bestimmten Winkelabstand zu dem benachbarten Sendelichtstrahl auf den Mikrospiegel reflektiert sind.

Vorteilhaft liegen die Umlenkspiegel als Reflektor auf einer dem optischen Sendern abgewandt liegenden Seite des Mikrospiegels. Der aus den Umlenkspiegeln gebildete Reflektor wirft die Sendelichtstrahlen auf den näher an den optischen Sendern angeordneten Mikrospiegel zurück, wobei die Sendelichtstrahlen entsprechend der Einstellung des Mikrospiegels letztlich von dem Mikrospiegel in die zu vermessende Umgebung reflektiert werden. Die als Reflektor angeordneten Umlenkspiegel liegen geneigt, so dass der Mikrospiegel neben dem Strahlweg, beispielsweise über dem Strahlweg, der Sendelichtstrahlen zwischen optischem Sender und Reflektor angeordnet werden kann.

Die optischen Sender sind vorteilhaft als Laser ausgebildet.

In einer besonders vorteilhaften Ausführungsform der Erfindung ist jedem optischen Sender eine Kollimatorlinse nachgeordnet. Die Kollimatorlinse, welche auch als Sammellinse bezeichnet wird, fokussiert die eingestrahlten Sendelichtstrahlen. Über die Konfiguration der Kollimatorlinsen kann das gewünschte Sichtfeld ("FOV" = "Field of View") und die Auflösung des LIDAR-Systems bestimmt werden.

Ausführungsbeispiele der Erfindung sind nachstehend anhand der Zeichnung näher erläutert. Es zeigen:
- Fig. 1:: eine schematische Darstellung eines Laserscanners mit einem Mikrospiegel und einer Umlenkeinrichtung für die Sendestrahlen gemäß dem Stand der Technik,
- Fig. 2:: ein erstes Ausführungsbeispiel eines erfindungsgemäßen Laserscanners mit einem Mikrospiegel und einer Umlenkeinrichtung für die Sendestrahlen,
- Fig. 3:: eine schematische Darstellung eines Laserscanners mit einem Mikrospiegel und einem zweiten Ausführungsbeispiel einer erfindungsgemäßen Umlenkeinrichtung für die Sendestrahlen,
- Fig. 4:: eine schematische Seitenansicht des Laserscanners gemäß Fig. 3.

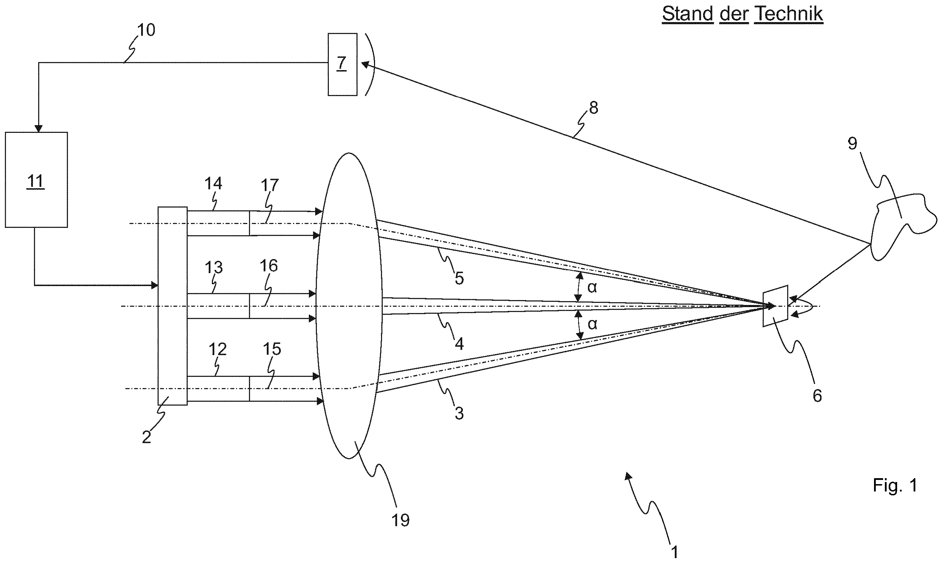

Fig. 1 zeigt eine schematische Ansicht eines Laserscanners 1 gemäß dem Stand der Technik. Der Laserscanner 1 ist Teil eines LIDAR-Systems und umfasst eine Sendeeinheit 2 zum Aussenden von Sendelichtstrahlen 3, 4, 5, welche von einem Mikrospiegel 6 auf die zu vermessende Szene gelenkt werden. Der Laserscanner 1 weist außerdem eine Empfangseinheit 7 zum Empfangen von reflektierten Strahlen 8 auf, welche an Objekten 9 in der Umgebung des Laserscanners 1 reflektiert wurden.

Die Empfangseinheit 7 weist photoelektrische Detektoren 10 auf, welche bei Einstrahlen eines reflektierten Strahls 8 ein dem reflektierten Strahl 8 entsprechendes elektrisches Detektionssignal 10 erzeugen. Das Detektionssignal 10 wird einer Steuereinheit 11 eingegeben. Die Steuereinheit 11 steuert die optischen Sender 12, 13, 14, welche die Sendelichtstrahlen 3, 4, 5 abgeben und ermittelt nach dem Lichtlaufzeitverfahren unter Berücksichtigung der Detektionssignale 10 Informationen über Lage und Entfernung des Objekts 9. Der Laserscanner 1 ist mehrkanalig ausgebildet und weist mehrere optische Sender, nämlich im gezeigten Ausführungsbeispiel drei optische Sender 12, 13, 14 auf. Die optischen Sender 12, 13, 14 sind als Laser ausgebildet. Die optischen Sender 12, 13, 14 sind in einer Reihe angeordnet, wobei die jeweiligen optischen Achsen 15, 16, 17 der Laser etwa parallel liegen. Um die zunächst parallel laufenden Sendelichtstrahlen 3, 4, 5 auf den gemeinsamen Mikrospiegel 6 zu lenken ist eine konvexe Linse 19 als optische Umlenkeinrichtung in den Strahlwegen der Sendelichtstrahlen 3, 4, 5 angeordnet. Alle Sendelichtstrahlen 3, 4, 5 durchtreten die Umlenklinse 19. Die physikalischen Eigenschaften der Umlenklinse 19 sind so gewählt und die Umlenklinse 19 unter Berücksichtigung der Abstände zwischen den optischen Achsen 15, 16, 17 angeordnet, dass die Sendelichtstrahlen 3, 4, 5 auf die verhältnismäßig kleine wirksame Spiegelfläche des Mikrospiegels 6 gerichtet sind. Die Berichtigung durch die Umlenklinse 19 richtet die Sendelichtstrahlen 3, 4, 5 in Winkelabständen α zueinander auf den Mikrospiegel 6, wobei der Mikrospiegel 6 die Sendelichtstrahlen 3, 4, 5 in entsprechenden Winkelabständen α in die Umgebung aussendet.

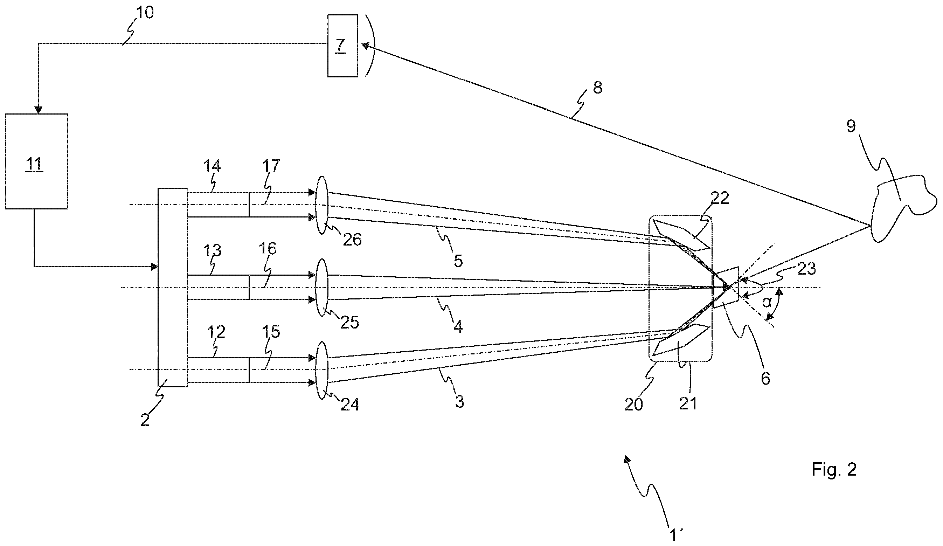

Fig. 2 zeigt einen erfindungsgemäßen Laserscanner 1', bei dem eine Umlenkeinrichtung 20 zur Richtung der Sendelichtstrahlen 3, 4, 5 auf den Mikrospiegel 6 anstelle einer Umlenklinse 19 im Strahlweg der Sendelichtstrahlen 3, 4, 5 den angeordneten Umlenkspiegel 21, 22 umfasst. Die optischen Sender 12, 13, 14 sind in einer Reihe, das heißt in einer gemeinsamen Ebene angeordnet, wobei die optischen Achsen 15, 16, 17 parallel liegen. Den beiden außen liegenden Sendelichtstrahlen 3, 4, 5 ist jeweils ein Umlenkspiegel 21, 22 zugeordnet, welcher den jeweiligen Sendelichtstrahl 3, 5 auf den Mikrospiegel 6 richtet. Der in der Reihe von optischen Sendern 12, 13, 14 mittig liegende optische Sender 13 wird zwischen den Umlenkspiegeln 21, 22 direkt auf den Mikrospiegel 6 gerichtet. Die beiden außen angeordneten Umlenkspiegel 21, 22 lenken die jeweiligen Sendelichtstrahlen in dem gewünschten Winkelabstand α zu dem jeweils benachbarten Sendelichtstrahl 3, 4, 5 auf den Mikrospiegel 6, welcher die Sendelichtstrahlen 3 zum Scannen der Umgebung in den entsprechenden Winkelabständen α reflektiert.

Der Mikrospiegel 6 besteht aus einer Vielzahl von einzelnen Spiegelelementen, welche jeweils eine verkippbare spiegelnde Fläche aufweisen. Der Mikrospiegel 6 ist in Drehrichtung 23 beweglich, wobei die Drehbewegung zum Scannen der Umgebung von der Steuereinheit 11 kontrolliert wird, beziehungsweise die Stellung des Mikrospiegels 6 oder/und die Winkelschritte beim Scannen der Umgebung der Steuereinheit 11 mitgeteilt sind.

Jedem als Laser ausgebildeten optischen Sender 12, 13, 14 ist jeweils eine Kollimatorlinse 24, 25, 26 nachgeordnet. Dabei werden solche Kollimatorlinsen 24, 25, 26 ausgewählt und angeordnet, deren physikalische Eigenschaften die gewünschte Divergenz der Sendelichtstrahlen 3, 4, 5 im Zusammenwirken mit den Umlenkspiegeln 21, 22 einstellen, beziehungsweise eine Divergenz mit dem gewünschten Winkelabstand α fördern.

Im Übrigen entspricht der Aufbau des erfindungsgemäßen Laserscanners 1' dem Aufbau des Laserscanners 1 gemäß Fig. 1. Für jeweils gleiche Merkmale sind dabei die gleichen Bezugszeichen wie in Fig. 1 verwendet.

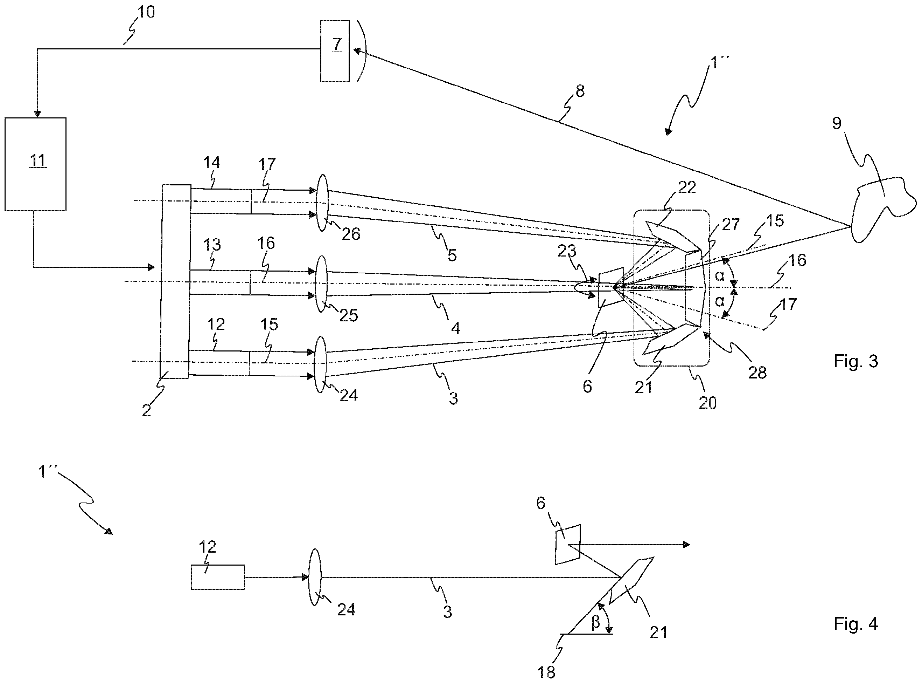

Fig. 3 und Fig. 4 zeigen ein alternatives Ausführungsbeispiel eines Laserscanners 1", welcher bis auf die nachstehend erläuterten Unterschiede dem Laserscanner 1' gemäß Fig. 2 entspricht.

Im Unterschied zum Ausführungsbeispiel gemäß Fig. 2 liegen die Umlenkspiegel 21, 22, 27 als Reflektor 29 auf der den optischen Sendern 12, 13, 14 abgewandt liegenden Seite des Mikrospiegels 6. Dabei sind die außen liegenden Umlenkspiegel 21, 22 analog der Ausführung gemäß Fig. 2 den außen liegenden Sendestrahlen 3, 5 zugeordnet. Zusätzlich ist auch dem in der Reihe der Sendelichtstrahlen mittig angeordneten Sendelichtstrahl 4 ein separater Umlenkspiegel 27 zugeordnet.

Die drei Umlenkspiegel 21, 22, 27 bilden gemeinsam einen Reflektor 28, welcher die einstrahlenden Sendelichtstrahlen 3, 4, 5 auf den zwischen Reflektor 28 und Sendeeinheit 2 liegenden Mikrospiegel 6 zurückwerfen. Der Mikrospiegel 6 ist außerhalb der Ebene 18 der Sendelichtstrahlen 3, 4, 5 angeordnet. Hierzu ist der Reflektor 28, beziehungsweise sind die einzelnen Umlenkspiegel 21, 22, 27, in einem Neigungswinkel β zur Ebene 18 der Sendelichtstrahlen 3 angeordnet. Wie sich aus der Seitenansicht des Laserscanners 1" in der Ebene der Sendelichtstrahlen 3, 4, 5 ergibt, werden die Sendelichtstrahlen von den Umlenkspiegeln 22 aufwärts reflektiert und auf den Mikrospiegel 6 gerichtet. Die Umlenkspiegel 21, 22, 27 sowie der Mikrospiegel und die Kollimatorlinsen 24, 25, 26 sowie der Abstand der optischen Achsen 15, 16, 17 bilden ein optisches System, welches derart konfiguriert wird und die einzelnen Komponenten aufeinander abgestimmt sind, dass der Mikrospiegel 6 die Sendelichtstrahlen 3, 4, 5 mit der gewünschten Divergenz und dem Winkelabstand α zwischen benachbart liegenden Sendelichtstrahlen 3, 4, 5 in die Umgebung des Laserscanners 1" abgibt.

## Patentansprüche

1. Laserscanner (1, 1', 1") für Kraftfahrzeuge mit mindestens zwei optischen Sendern (12, 13, 14) zum Aussenden jeweils eines Sendelichtstrahls (3, 4, 5) auf die zu vermessende Szene sowie mit einer im Strahlweg wenigstens eines Sendelichtstrahls (3, 4, 5) vor einem Mikrospiegel (6) angeordneten optischen Umlenkeinrichtung (20), welche derart ausgebildet und angeordnet ist, dass die Sendelichtstrahlen (3, 4, 5) auf den Mikrospiegel (6) gelenkt sind, wobei die Umlenkeinrichtung (20) wenigstens einen im Strahlweg eines Sendelichtstrahls (3, 4, 5) angeordneten Umlenkspiegel (21, 22, 27) aufweist und wobei die optischen Sender (12, 13, 14) in einer Reihe angeordnet sind **dadurch gekennzeichnet, dass** den außen liegenden optischen Sendern (12, 14) jeweils ein Umlenkspiegel (21, 22) zugeordnet ist und
dass die Umlenkspiegel (21, 22, 27) derart relativ zu dem jeweils zugeordneten optischen Sender (12, 13, 14) angeordnet und ausgerichtet sind, dass die jeweiligen Sendelichtstrahlen (3, 4, 5) in einem bestimmten Winkelabstand (α) zu den benachbart liegenden Sendelichtstrahlen (3, 4, 5) auf den Mikrospiegel (6) reflektiert sind, wobei die Sendelichtstrahlen (3, 4, 5) in einer gemeinsamen Scanebene liegen.

2. Laserscanner (1, 1', 1") nach Anspruch 1,
**dadurch gekennzeichnet, dass**
die Umlenkeinrichtung (20) für jeden der ihr zugeordneten Sendelichtstrahlen (3, 4, 5) einen Umlenkspiegel (21, 22, 27) aufweist.

3. Laserscanner (1, 1', 1") nach Anspruch 1 oder 2,
**dadurch gekennzeichnet, dass**
ein optischer Sender (13) auf den Mikrospiegel (6) ausgerichtet ist und jedem weiteren optischen Sender (12, 14) ein Umlenkspiegel (21, 22) zugeordnet ist.

4. Laserscanner (1, 1', 1") nach einem der vorhergehenden Ansprüche,
**dadurch gekennzeichnet, dass**
die Umlenkspiegel (21, 22, 27) als Reflektor (28) auf einer den optischen Sendern (12, 13, 14) abgewandt liegenden Seite des Mikrospiegels (6) liegen.

5. Laserscanner (1, 1', 1") nach einem der vorhergehenden Ansprüche,
**dadurch gekennzeichnet, dass**
die optischen Sender (12, 13, 14) als Laser ausgebildet sind.

6. Laserscanner (1, 1', 1") nach einem der vorhergehenden Ansprüche,
**dadurch gekennzeichnet, dass**
jedem optischen Sender (12, 13, 14) jeweils eine Kollimatorlinse (24, 25, 26) nachgeordnet ist.

## Claims

1. Laser scanner (1, 1', 1") for motor vehicles, having at least two optical transmitters (12, 13, 14) for emitting in each case one transmitted light beam (3, 4, 5) onto the scene to be measured and also having an optical deflecting device (20), which is arranged in the beam path of at least one transmitted light beam (3, 4, 5) upstream of a micromirror (6) and is embodied and arranged such that the transmitted light beams (3, 4, 5) are guided onto the micromirror (6), wherein the deflecting device (20) has at least one deflecting mirror (21, 22, 27) arranged in the beam path of a transmitted light beam (3, 4, 5) and wherein the optical transmitters (12, 13, 14) are arranged in a row, **characterized in that** in each case one deflecting mirror (21, 22) is assigned to the outwardly located optical transmitters (12, 14) and **in that** the deflecting mirrors (21, 22, 27) are arranged and oriented relative to the respectively assigned optical transmitter (12, 13, 14) such that the respective transmitted light beams (3, 4, 5) are reflected onto the micromirror (6) at a specified angular distance (α) from the neighbouring transmitted light beams (3, 4, 5), wherein the transmitted light beams (3, 4, 5) lie in a common scanning plane.

2. Laser scanner (1, 1', 1") according to Claim 1, **characterized in that**
the deflecting device (20) has a deflecting mirror (21, 22, 27) for each of the transmitted light beams (3, 4, 5) assigned to said deflecting device.

3. Laser scanner (1, 1', 1") according to Claim 1 or 2,
**characterized in that**
an optical transmitter (13) is oriented towards the micromirror (6) and a deflecting mirror (21, 22) is assigned to each further optical transmitter (12, 14).

4. Laser scanner (1, 1', 1") according to one of the preceding claims,
**characterized in that**
the deflecting mirrors (21, 22, 27) are situated, as a reflector (28), on a side of the micromirror (6) that is remote from the optical transmitters (12, 13, 14).

5. Laser scanner (1, 1', 1") according to one of the preceding claims,
**characterized in that**
the optical transmitters (12, 13, 14) are embodied in the form of lasers.

6. Laser scanner (1, 1', 1") according to one of the preceding claims,
**characterized in that**
in each case one collimator lens (24, 25, 26) is arranged downstream of each optical transmitter (12, 13, 14).

## Revendications

1. Dispositif de balayage laser (1, 1', 1") destiné à des véhicules automobiles, comprenant au moins deux émetteurs optiques (12, 13, 14) destinés à émettre chacun un faisceau lumineux d'émission (3, 4, 5) vers la scène à mesurer ainsi qu'un système de déviation optique (20) agencé dans le chemin de faisceau d'au moins un faisceau lumineux d'émission (3, 4, 5) devant un micromiroir (6), lequel système est conçu et disposé de telle sorte que les faisceaux lumineux d'émission (3, 4, 5) soient dirigés vers le micromiroir (6), dans lequel le système de déviation (20) comporte au moins un miroir de déviation (21, 22, 27) agencé dans le chemin de faisceau d'un faisceau lumineux d'émission (3, 4, 5) et dans lequel les émetteurs optiques (12, 13, 14) sont agencés en ligne,
**caractérisé en ce qu'**un miroir de déviation (21, 22) est associé à chacun des émetteurs optiques (12, 14) situés à l'extérieur et
**en ce que** les miroirs de déviation (21, 22, 27) sont agencés et orientés par rapport à l'émetteur optique (12, 13, 14) respectivement associé de telle sorte que les faisceaux lumineux d'émission (3, 4, 5) respectifs soient réfléchis sur le micromiroir (6) à une distance angulaire (α) déterminée des faisceaux lumineux d'émission (3, 4, 5) voisins, dans lequel les faisceaux lumineux d'émission (3, 4, 5) se situent dans un plan de balayage commun.

2. Dispositif de balayage laser (1, 1', 1") selon la revendication 1,
**caractérisé en ce que** le dispositif de déviation (20) comporte un miroir de déviation (21, 22, 27) pour chacun des faisceaux lumineux d'émission (3, 4, 5) qui lui sont associés.

3. Dispositif de balayage laser (1, 1', 1") selon la revendication 1 ou 2,
**caractérisé en ce qu'**un émetteur optique (13) est orienté vers le micromiroir (6) et **en ce qu'**un miroir de déviation (21, 22) est associé à chaque autre émetteur optique (12, 14) .

4. Dispositif de balayage laser (1, 1', 1") selon l'une des revendications précédentes,
**caractérisé en ce que** les miroirs de déviation (21, 22, 27) sont placés, en tant que réflecteurs (28), sur un côté du micromiroir (6) qui est tourné à l'opposé des émetteurs optiques (12, 13, 14).

5. Dispositif de balayage laser (1, 1', 1") selon l'une des revendications précédentes,
**caractérisé en ce que** les émetteurs optiques (12, 13, 14) sont réalisés sous la forme de lasers.

6. Dispositif de balayage laser (1, 1', 1") selon l'une des revendications précédentes,
**caractérisé en ce que** chaque émetteur optique (12, 13, 14) est respectivement suivi d'une lentille de collimation (24, 25, 26).
